# EUROPEAN PATENT APPLICATION

(11) **EP 1 717 780 A1**
(43) Date of publication of application: **02.11.2006**
(21) Application number: 06252263.6
(22) Date of filing: 27.04.2006
(51) Int. Cl.: G09F 7/18, F16B 2/22, F16B 2/24

(54) **Graphics mounting clip**

(30) Priority: 27.04.2005 GB 0508525
(71) Applicant: Wrench, Guy, Hurstpierpoint West Sussex BN6 9RE (GB)
(72) Inventor: Wrench, Guy, Hurstpierpoint West Sussex BN6 9RE (GB)
(74) Representative: Booth, Catherine Louise

(57) **Abstract**

An invention that enables users to mount graphics (B) onto a shell scheme using a simple clip-in/clip-out device which features a surface onto which users can then attach graphics.

## Description

This invention relates to a device that facilitates the mounting of graphic panels to an exhibition shell scheme stand.

Currently there is no available easy method of mounting graphic panels to an exhibition shell scheme stand. This is because the manufacturers of these shell schemes do not allow you to screw fixings into their metal frameworks. A common solution is to construct an independent frame work of wooden battens onto which you can then attach your graphic panels. This is a time consuming solution that also requires the services of a workman/workwoman with tools.

This invention is a clip system that uses the existing design of a shell scheme framework to slot into that framework, thus providing an independent surface onto which exhibitors can attach their graphics.

The advantage of this invention is that it has been designed to clip in and out of the grooves built into standard shell scheme systems, thus providing a quick and easy "clip-in/clip-out" surface onto which exhibitors can mount their graphics. Not only does this save considerable time in preparing a shell stand for graphics (literally minutes Vs hours), it also does away with the need for workers with tools. Furthermore the mounting clip is supplied in manageable lengths so that it can be transported in a small car, thus eliminating the need for an estate car or a van to transport long battens (plus tools and workers).

The design, manufacture and simplicity of this invention can be best understood by referring to the accompanying drawings:-
- Figure 1 shows a drawing of the mounting clip
- Figure 2 shows a cross section of the mounting clip
- Figure 3 shows a cross section of a typical shell scheme framework
- Figure 4 shows the mounting clip in position within the framework
- Figure 5 shows the mounting clip in position with graphics attached
- Figure 6 shows a cross section of the clip and right-angled mounting surface

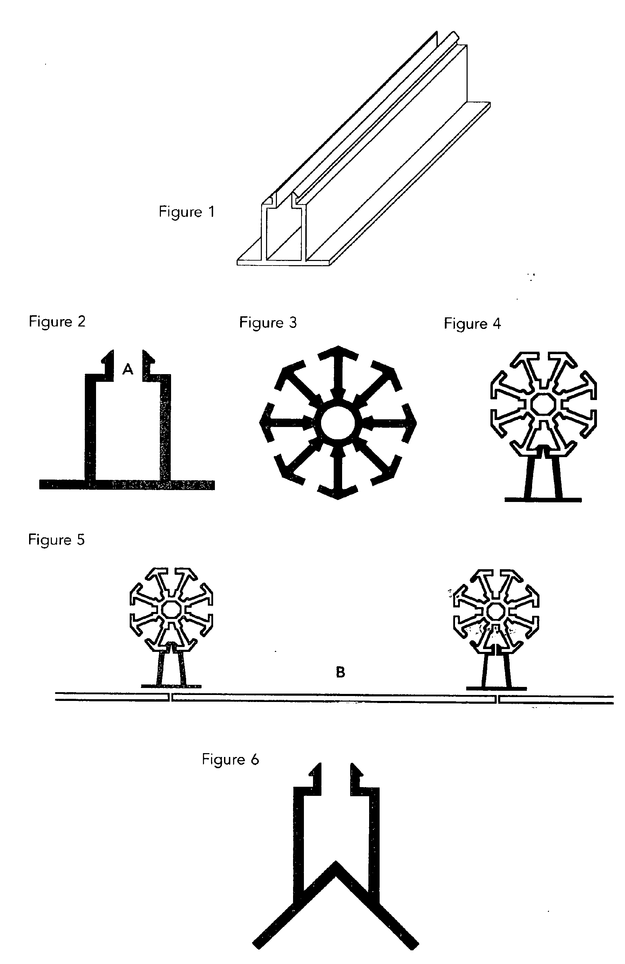

A length of the mounting clip is shown in Figure 1. Figure 2 shows a cross section of the clip and mounting surface. This invention is installed very easily by squeezing together the split arrow heads (A) and then gently pushing the clip mounting into the existing grooves that are part of the shell scheme structure (see Figure 3). When the clip mounting is fully inserted into these grooves, the split arrow heads lock it into place (see Figure 4). Graphics (B) can then be mounted/attached to the flat surface (see Figure 5). To remove the mounting clip, the user first removes the graphics, then squeezes one end of the clip system and pulls. As the clip comes out, the arrow heads are automatically compressed by the shape of the grooves in the framework which, in turn, eases removal of the full length of clip. Insertion and removal can be implemented in a matter of just seconds and no tools are required.

## Claims

1. A flexible clip device that slots into the existing structure of a shell scheme stand, thus enabling users to attach graphics (B) onto its integral flat surface. See Figure 5.

2. A flexible clip device according to Claim 1 but with a right angled mounting surface to accommodate mounting graphics (B) into the corners of a shell stand. See Figure 6.

3. A mounting clip for an exhibition stand comprising mounting means for receiving in a groove in a framework, and a planar surface for receiving a graphics panel, wherein the mounting means and the planar surface are arranged relative to each other such that, in use, substantially the entirety of the planar surface protrudes beyond the outermost portion of the framework.

4. A mounting clip as claimed in claim 3, wherein the mounting means and the planar surface are spaced apart by a pair of substantially parallel walls that are perpendicular to the planar surface and that each terminate with one portion of a substantially symmetrical split arrow head (A).

5. A mounting clip as claimed in claim 4, comprising a material that is sufficiently flexible such that, in use, the portions of the split arrow head (A) can be squeezed together for insertion to and/or removal from the framework.

6. A mounting clip as claimed in any one of claims 3 to 5, wherein the mounting clip comprises an elongate strip.

7. A mounting clip as claimed in any one of claims 3 to 6, wherein the planar surface further comprises attachment means such that, in use, a graphics panel (B) can be attached or mounted to the planar surface.

8. A mounting clip for an exhibition stand comprising mounting means (A) for receiving in a groove in a framework, and a surface for receiving a graphics panel (B), wherein the surface comprises a pair of planar surfaces arranged such that their ends meet to form a substantially right-angled corner, and wherein the mounting means and the surface are arranged relative to each other such that, in use, substantially the entirety of the surface protrudes beyond the outermost portion of the framework.

9. An exhibition stand system comprising:
a framework; and
at least one elongate mounting clip comprising means (A) for receiving in the framework, a planar surface for facing outwardly of the framework when received therein, and attachment means for attaching at least one graphics panel (B) to the mounting clip on the outwardly facing planar surface.

10. An exhibition stand system as claimed in claim 9, wherein the framework comprises a substantially cylindrical framework having a substantially octagonal outer periphery, the framework further comprising eight openings disposed substantially equally about the outer periphery for receiving mounting means (A).
